Europäisches Patentamt

European Patent Office

Office européen des brevets

(11) Veröffentlichungsnummer: 0 498 167 A1

## (12) EUROPÄISCHE PATENTANMELDUNG

(21) Anmeldenummer: 92100491.7

(22) Anmeldetag: 14.01.92

(51) Int. Cl.5: A01K 1/01

(30) Priorität: 02.02.91 DE 9101197 U

(43) Veröffentlichungstag der Anmeldung:
12.08.92 Patentblatt 92/33

(84) Benannte Vertragsstaaten:
BE CH DE GB LI NL SE

(71) Anmelder: Ameis, Ernst
Bornstrasse 12
W-2000 Hamburg 13(DE)

(72) Erfinder: Ameis, Ernst
Bornstrasse 12
W-2000 Hamburg 13(DE)

(74) Vertreter: DIEHL GLAESER HILTL & PARTNER
Patentanwälte Königstrasse 28
W-2000 Hamburg 50(DE)

(54) Katzentoilette.

(57) Katzentoilette mit einem nach oben offenen Kunststoffbehälter mit am Boden (10) des Behälters angeordneter Fußmatte oder Kunststoffrasen. Unter diesem befindet sich ein Wasserreservoir (11), dessen Wasser als Spülwasser aus Öffnungen (15) austreten kann.

Fig.2

EP 0 498 167 A1

Die Erfindung bezieht sich auf eine Katzentoilette.

Es ist eine Vielzahl von Katzentoiletten bekannt, die im wesentlichen aus einem nach oben offenen Behälter bestehen, in den sog. Katzenstreu eingefüllt und nach Benutzung entfernt wird. Katzen haben häufig die Angewohnheit, das Katzenstreu nach Verrichtung des Geschäftes einander durchzuwirbeln, so daß nicht sichergestellt ist, daß das Katzenstreu nur in dem dafür vorgesehenen Behälter verbleibt. Hinzu kommt noch, daß das Entfernen des benutzten Katzenstreus nicht gerade angenehm ist.

Es sind auch andere Ausführungsformen von Katzentoiletten bekannt, bei denen ebenfalls Katzenstreu verwendet wird. Der nach oben offene Behälter wird aus Papier- oder Pappmaterial hergestellt und nach Benutzung im zusammengelegten Zustand über die Mülltonne der allgemeinen Müllabfuhr entsorgt. Zwar ist in diesem Fall der Entsorgungsvorgang angenehmer durchzuführen, jedoch müssen erhebliche Materialien entsorgt werden, was grundsätzlich nicht gewünscht wird.

Die Erfindung beschäftigt sich mit dem Problem, eine Katzentoilette so auszugestalten, daß neben einem angenehmen Umgang mit der Toilette auch eine Entsorgung möglich ist, bei der keine zusätzliche Materialien mitentsorgt werden müssen.

Erreicht wird dies durch die in den Ansprüchen angegebenen Merkmale, vor allem dadurch, daß nach oben hin oder am Boden des Behälters mindestens eine Matte aus einem Kunststoff in der Art einer Fußmatte oder eines sogenannten Kunststoffrasens oder dergl. - lösbar oder nicht - angeordnet ist, der einerseits von den Exkrementen von Katzen nicht angegriffen wird und andererseits leicht abwaschbar ist.

Bei einer bevorzugten Ausführungsform sind die Matten im wesentlich in ihrer Form auf die Größe des Beckens eines WC begrenzt.

Bei einer anderen Ausführungsform sind die Matten mit Handgriffen oder Schlaufenteilen zwecks einfacherer Handhabung ausgebildet.

Bei einer vorteilhaften Ausführungsform ist der Boden des Behälters in seinem Mittelteil nach oben domförmig gewölbt.

Bei einer weiteren Ausführungsform ist der domförmige Teil des Bodens von einer Sammelrinne umgeben.

Bei einer anderen bevorzugten Ausführungsform ist unter dem Boden ein Wasserreservoir angebracht und im Bodenteil ist eine Vielzahl von Wasseraustrittsöffnungen angeordnet, wobei die Wasseraustrittsöffnungen vorzugsweise über die Oberfläche des Bodens gleichförmig verteilt sind.

Wesentlich für die vorliegende Erfindung ist die Verwendung eines leicht abwaschbaren Materials in Form einer Matte als Hauptbestandteil der Katzentoilette, die beliebig oft mit Hilfe von Wasser von Kot- und Urinresten befreit werden kann. Als Material für die Matte kommt irgendein bekannter Kunststoff in Frage, so wie es beispielsweise als Fußmatte oder Kunstrasen bereits auf dem Markt ist.

Der Behälter, der die Matte aufnimmt, kann mit nach oben vorstehenden Vorsprüngen gebildet sein, die in Abständen zueinander angeordnet sind, so daß die Matte nicht unmittelbar auf dem Boden des Behälters aufruht, sondern ein Zwischenraum zwischen der Bodenfläche des Behälters und der Matte an ihrer unteren Fläche vorhanden ist. Auch könnte die Matte selbst mit nach unten vorstehenden Vorsprüngen ausgebildet sein, um diesen Abstand sicherzustellen.

Die Matte hat im wesentlichen die für eine Katzentoilette erforderliche Größe, d.h. sie ist an die Bodenfläche des wannenförmigen Behälters angepaßt. Es besteht jedoch die Möglichkeit, mehrere Matten im Inneren des Behälters anzuordnen, die für sich genommen genügend klein sind, so daß man sie in das Becken einer herkömmlichen Toilette einhängen kann, um dort den Spül- und Reinigungsvorgang durchzuführen.

Die Matte kann auch an irgendeiner seitlichen Stelle mit einem Traggriff oder einer Schlaufe versehen sein, so daß der Herausnahmevorgang und auch der Reinigungsvorgang hierdurch wesentlich angenehmer gestaltet werden können.

Bei einer Ausgestaltung der Erfindung mit einem elastischen Bodenteil oberhalb eines Wasserreservoirs und einer Vielzahl von Wasseraustrittsöffnungen kann erreicht werden, daß bei Belastung des Bodens Wasser austritt und über die Oberfläche des domförmigen Bodens herabrieselt und in die Auffangrinne gelangt. Bei einer solchen Ausführungsform der Erfindung wird der Spül- und Reinigungsvorgang also gleichzeitig bei Benutzung eingeleitet.

Die Erfindung wird nachstehend anhand der Zeichnung beispielsweise erläutert.

Fig. 1     ist eine Draufsicht auf eine Katzentoilette gemäß der Erfindung.

Fig. 2     ist eine vertikale Schnittansicht der in Fig. 1 gezeigten Katzentoilette gemäß der Erfindung.

In den Figuren ist eine Katzentoilette gezeigt, die einen kreisförmigen Grundriß aufweist, obwohl auch andere Ausgestaltungen einer Katzentoilette mit einer anderen Umrißgestaltung möglich sind.

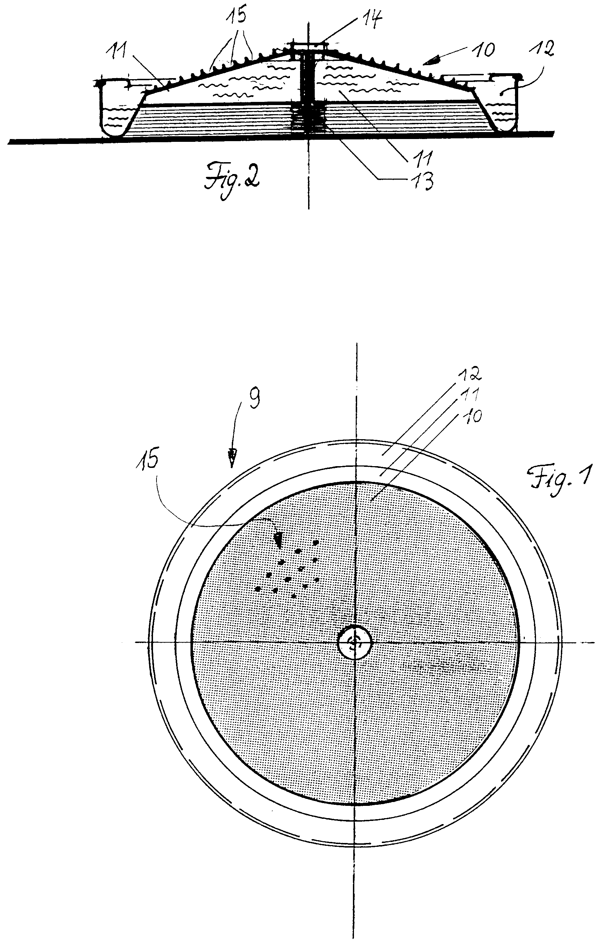

Ein Bodenteil 10 hat im wesentlichen die Form eines flachen Kegels und ist an seinem unteren Ende mit einem Fuß verbunden, so daß unterhalb des Bodenteils 10 ein geschlossener Raum vorhanden ist. Dieser Raum dient als Wasserreservoir 11. Das Wasser wird auf irgendeine Art und Weise in diesen Raum eingefüllt und tritt über Austrittsöffnungen 15 aus, die sich an dem Bodenteil befinden. In Fig. 2 ist nur ein Teilbereich derartiger Öffnungen gezeigt, es liegt im Rahmen der Erfindung, eine Vielzahl derartiger Öffnungen gleichmäßig über die Außenoberfläche des Bodens 10 verteilt vorzusehen. Der Bodenteil 10 kann nachgiebig ausgestaltet sein, so daß durch Belastung Wasser durch die Öffnung 15 herausgedrückt wird. Dieser Vorgang könnte über Hilfsmittel verstärkt oder unterstützt werden.

In den Figuren ist eine Spiralfeder 13 unterhalb des Behälters gezeigt. Oberhalb der Spiralfeder und im oberen Bereich des Bodens 10 befindet sich ein beweglicher Stöpsel 14, der eine Luftzufuhr in das Wasserreservoir 11 bei Belastung ermöglicht.

Der Boden 10 ist an seinem äußeren Rand vollständig von einer Auffang- oder Sammelrinne umgeben, in die das Wasser hineingelangt und dabei Kot und Urin mit sich führt.

Am Bodenteil 10 ist eine Art Kunststoffrasen befestigt, dies kann lösbar oder nicht lösbar sein. Der Kunststoffrasen besteht aus einem beständigen Material, so daß es nicht angegriffen wird. Derartige Kunststoffrasen sind im Handel erhältlich und können in die gewünschte Form geschnitten werden. Sie können direkt auf die Unterlage aufgelegt werden oder es können Zwischenstücke zwischengelegt werden.

**Patentansprüche**

1. Katzentoilette, im wesentlichen bestehend aus einem Kunststoffbehälter, dadurch gekennzeichnet, daß nach oben hin oder am Boden (10) des Behälters mindestens eine Matte aus einem Kunststoff in der Art einer Fußmatte oder eines sog. Kunststoffrasens oder dergl. - lösbar oder nicht - angeordnet ist, der einerseits von den Exkrementen von Katzen nicht angegriffen wird und andererseits leicht abwaschbar ist.

2. Katzentoilette nach Anspruch 1, dadurch gekennzeichnet, daß die Matten im wesentlichen in ihrer Form auf die Größe des Beckens eines WC begrenzt sind.

3. Katzentoilette nach Anspruch 1 oder 2, dadurch gekennzeichnet, daß die Matten mit Handgriffen oder Schlaufenteilen zwecks einfacherer Handhabung ausgebildet sind.

4. Katzentoilette nach einem der Ansprüche 1 bis 3, dadurch gekennzeichnet, daß der Boden (10) des Behälters in seinem Mittelteil nach oben domförmig gewölbt ist.

5. Katzentoilette nach Anspruch 4, dadurch gekennzeichnet, daß der domförmige Teil des Bodens von einer Sammelrinne (12) umgeben ist.

6. Katzentoilette nach Anspruch 4 oder 5, dadurch gekennzeichnet, daß unter dem Boden (10) ein Wasserreservoir (11) angebracht ist und im elastisch ausgebildeten Bodenteil (10) eine Vielzahl von Wasseraustrittsöffnungen (15) angeordnet ist, wobei die Wasseraustrittsöffnungen vorzugsweise über die Oberfläche des Bodens (10) gleichförmig verteilt sind.

EP 0 498 167 A1

Fig.2

Fig.1

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 793 988 (TRAEGER) <br> * Zusammenfassung * <br> * Spalte 1, Zeile 67 - Spalte 2, Zeile 1; Abbildungen 1,3 * <br><br> --- | 1 | A01K1/01 |
| A | US-A-3 752 121 (BRAZZELL) <br> * Zusammenfassung * <br> * Spalte 2, Zeile 54 - Zeile 63; Abbildungen 1-3 * <br><br> --- | 1 | |
| A | FR-A-2 381 152 (DESPRO AKTIENGESELLSCHAFT) <br> * das ganze Dokument * <br><br> --- | 4,6 | |
| A | US-A-3 324 828 (JOHNSON) <br> * das ganze Dokument * <br><br> --- | 4,5 | |
| A | US-A-3 949 429 (HALL) <br> * Zusammenfassung; Abbildung 1 * <br><br> --- | 2,3 | |
| A | FR-A-2 590 473 (MAURO) <br><br> ----- | | |

RECHERCHIERTE SACHGEBIETE (Int. Cl.5 )

A01K
A47L
A47G

Der vorliegende Recherchenbericht wurde für alle Patentansprüche erstellt

| Recherchenort | Abschlußdatum der Recherche | Prüfer |
|---|---|---|
| DEN HAAG | 01 APRIL 1992 | VON ARX V.U. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)